# EUROPEAN PATENT APPLICATION

(11) **EP 4 625 510 A1**
(43) Date of publication of application: **01.10.2025**
(21) Application number: 25165664.1
(22) Date of filing: 24.03.2025
(51) Int. Cl.: H01M 4/04, H01M 4/62, H01M 10/0525, H01M 50/426, H01M 50/443, H01M 50/46, H01M 10/0587, H01M 4/02

(54) **ELECTRODE ASSEMBLY, BATTERY, AND ELECTRICITY-CONSUMPTION DEVICE**

(30) Priority: 28.03.2024 CN 202410370701
(71) Applicant: Xiamen Hithium Energy Storage Technology Co., Ltd., Xiamen, Fujian 361100 (CN)
(72) Inventor: XIAO, Wenwu, Xiamen, Fujian 361100 (CN); ZHANG, Caomeng, Xiamen, Fujian 361100 (CN); DAI, Shaowei, Xiamen, Fujian 361100 (CN); ZHANG, Jun, Xiamen, Fujian 361100 (CN); LONG, Hai, Xiamen, Fujian 361100 (CN)
(74) Representative: Mewburn Ellis LLP

(57) **Abstract**

The disclosure relates to an electrode assembly (100), a battery (200), and an electricity-consumption device (300). The electrode assembly (100) includes a negative electrode (110), a separator (120), and a positive electrode (130). The separator (120) is disposed on one side of the negative electrode (110), the separator (120) includes a substrate (121) and an adhesive layer (122), and the adhesive layer (122) is disposed on a surface of the substrate (121). The adhesive layer (122) includes first polymers (123), and the first polymers (123) are copolymers of vinylidene fluoride and hexafluoropropylene. The positive electrode (130) is disposed on one side of the separator (120) away from the negative electrode (110), and the positive electrode (130) includes a current collector layer (131) and an active material layer (132) that are stacked. The active material layer (132) is disposed on a surface of the current collector layer (131) and is disposed facing the adhesive layer (122). The active material layer (132) includes active particles (133) and second polymers (134). The second polymers (134) are particulate, the second polymers (134) are dispersed in the active particles (133), and the second polymers (134) are bonded with the first polymers (123).

## Description

### TECHNICAL FIELD

The present disclosure relates to the field of battery technology, and in particular, to an electrode assembly, a battery, and an electricity-consumption device.

### BACKGROUND

In the practical application of a battery, in order to improve the interfacial properties of an electrode assembly and enhance the adhesion between a separator and electrodes, a glue-coated separator is often adopted. During the preparation process, the separator requires a preheating treatment in a tunnel oven, followed by a hot-pressing operation, to achieve adhesion between the separator and the electrodes. However, the tunnel oven is costly, and hot-pressing demands high energy consumption, thereby increasing the preparation cost of the electrode assembly. If the separator is directly bonded with the electrodes at room temperature, the adhesive force between the separator and the electrodes is excessively weak, leading to wrinkles of the separator on the surface of the electrodes, which affects the cycling performance of the battery.

### SUMMARY

In view of this, the disclosure provides an electrode assembly, a battery, and an electrical device. The electrode assembly can achieve the lamination of a negative electrode, a separator, and a positive electrode without hot-pressing. Moreover, superior attachment between the separator and the negative electrode and superior attachment between the separator and the positive electrode are achieved, and the preparation cost of the electrode assembly is low.

The disclosure provides an electrode assembly, and the electrode assembly includes a negative electrode, a separator, and a positive electrode. The separator is disposed on one side of the negative electrode, the separator includes a substrate and an adhesive layer, and the adhesive layer is disposed on a surface of the substrate. The adhesive layer includes first polymers, and the first polymers are copolymers of vinylidene fluoride and hexafluoropropylene. The positive electrode is disposed on one side of the separator away from the negative electrode. The positive electrode includes a current collector layer and an active material layer that are stacked. The active material layer is disposed on a surface of the current collector layer and is disposed facing the adhesive layer. The active material layer includes active particles and second polymers. The second polymers are particulate, the second polymers are dispersed in the active particles, and the second polymers are bonded with the first polymers.

Further, a melting point of the first polymers ranges from 100°C to 140°C.

Further, a glass transition temperature *Tg* of the second polymers satisfies 35°C ≤ *Tg* ≤ 60°C.

Further, in a raw material of the first polymers, a molar ratio *α* of the vinylidene fluoride to the hexafluoropropylene satisfies 1 ≤ *α* ≤ 9.

Further, the adhesive layer includes multiple adhesive portions arranged at intervals, and a width *D*1 of each of the multiple adhesive portions satisfies 200µm ≤ *D*1 ≤ 1000µm.

Further, a distance *D*2 between any two adjacent adhesive portions satisfies 50µm ≤ *D*2 ≤ 500µm.

Further, a spraying amount *C* of the adhesive layer satisfies 0.5g/m² ≤ *C* ≤ 1.0g/m².

Further, in the active material layer, a mass fraction *A* of the second polymers satisfies 2% ≤ *A* ≤ 5%.

Further, before the negative electrode, the separator, and the positive electrode are pressed together, the second polymers are spherical or quasi-spherical, and a median particle diameter *D*3 of the second polymers satisfies 5µm ≤ *D*3 ≤ 10µm.

Further, the second polymers include at least one member selected from a group consisting of polymethyl methacrylate, polyvinylidene fluoride, and polyethylene.

The disclosure further provides a battery. The battery includes a housing, an electrolyte solution, and the electrode assembly provided in the disclosure. the housing defines an accommodating chamber and is configured to accommodate the electrolyte solution and the electrode assembly, and the electrolyte solution is configured to immerse at least part of the electrode assembly.

The disclosure further provides an electricity-consumption device. The electricity-consumption device includes a device body and the battery provided in the disclosure, and the battery is configured to power the device body.

In the disclosure, the negative electrode, the separator, and the positive electrode are sequentially stacked. The separator includes the substrate and the adhesive layer, and the adhesive layer includes the first polymers. The first polymers are copolymers of the vinylidene fluoride and the hexafluoropropylene. Compared to the case where the first polymers are polyvinylidene fluoride, the copolymer of the vinylidene fluoride and the hexafluoropropylene has lower regularity than the polyvinylidene fluoride, resulting in that a melting point of the copolymer of the vinylidene fluoride and the hexafluoropropylene is lower than a melting point of the polyvinylidene fluoride. Therefore, when the negative electrode, the separator, and the positive electrode are pressed together, the separator can deform during the lamination process and be bonded with the positive electrode without being preheated in a tunnel oven, ensuring superior attachment between the negative electrode, the separator, and the positive electrode. In the assembly process of the electrode assembly provided in the disclosure, the separator may be bonded with the positive electrode and superior attachment between the separator and the positive electrode may be achieved without preheating the separator in a tunnel oven or hot-pressing the separator, which is beneficial for reducing the energy consumption requirements for preparing the electrode assembly, thereby lowering the preparation cost of the electrode assembly. Furthermore, the active material layer includes active particles and the second polymers, and the second polymers are dispersed in the active particles. In other words, the second polymers are partially exposed on the surface of the active material layer facing the adhesive layer. When the adhesive layer and the active material layer are disposed opposite to each other, the first polymers and the second polymers are bonded with each other, achieving the adhesion between the positive electrode and the separator. During the lamination process, both the first polymers and the second polymers deform and are tightly bonded with each other, resulting in a strong adhesion between the positive electrode and the separator. Compared to the case where the first polymers of the separator are directly bonded with the active particles, the adhesion between the first polymers and the second polymers is stronger, which further enhances the adhesion between the separator and the positive electrode. The reason is that the second polymers and the first polymers both have a softer texture, while the active particles have a harder texture. Additionally, the negative electrode, the separator, and the positive electrode are stacked and wound, followed by lamination. In this case, the negative electrode, the separator, and the positive electrode are tied together, and the positive electrode is tightly bonded with the separator, preventing the separator from detaching from the positive electrode. A tight attachment between the separator and the negative electrode is also ensured. In the disclosure, superior adhesion between the separator and the positive electrode is achieved, enabling superior attachment between the separator and the negative electrode. In this way, the separator may suppress the thermal expansion of the negative electrode during charge and discharge cycles. Moreover, the separator can still attach well to the negative electrode after the contraction of the negative electrode, avoiding wrinkles on the surface of the negative electrode. Therefore, an increase of internal resistance of the battery due to wrinkles of the separator may be avoided, and lithium precipitation at the wrinkles on the surface of the negative electrode caused by active ions in the battery may be avoided, thereby extending the service life of the electrode assembly. It is also beneficial for improving the energy density and the cycling performance of the battery when the electrode assembly is applied to the battery.

### BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.
FIG. 1 is a schematic structural view of an electrode assembly provided in an embodiment of the disclosure.
FIG. 2 is a schematic cross-sectional structural view of a separator provided in an embodiment of the disclosure.
FIG. 3 is a schematic cross-sectional structural view of a positive electrode provided in an embodiment of the disclosure.
FIG. 4 is a schematic cross-sectional structural view of an electrode assembly provided in an embodiment of the disclosure.
FIG. 5 is a schematic structural top view of a separator provided in an embodiment of the disclosure.
FIG. 6 is a scanning electron microscopy (SEM) image of adhesive portions provided in an embodiment of the disclosure.
FIG. 7 is a schematic structural view of a battery provided in an embodiment of the disclosure.
FIG. 8 is a schematic exploded structural view of a battery provided in an embodiment of the disclosure.
FIG. 9 is a circuit block diagram of an electricity-consumption device provided in an embodiment of the disclosure.
FIG. 10 is a schematic structural view of an electricity-consumption device provided in an embodiment of the disclosure.

### Description of reference signs:

100 - electrode assembly, 110 - negative electrode, 120 - separator, 121 - substrate, 122 - adhesive layer, 123 - first polymer, 124 - adhesive portion, 130 - positive electrode, 131 - current collector layer, 132 - active material layer, 133 - active particle, 134 - second polymer, 200 - battery, 210 - housing, 211 - accommodating chamber, 212 - side shell, 213 - top cap, 215 - electrolyte solution, 300 - electricity-consumption device, 310 - device body.

### DETAILED DESCRIPTION

The following will illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like in the description, claims of the present disclosure, and the above accompanying drawings are used for distinguishing different objects, rather than for describing a specific order. In addition, the terms "include", "have", and any variations thereof are intended to cover non-exclusive inclusions. For example, a process, method, system, product, or apparatus that includes a series of steps or units is not limited to the listed steps or units, but optionally further includes steps or units not listed, or optionally further includes other steps or units inherent to the process, method, product, or apparatus.

Reference to "embodiment" or "implementation" herein means that a particular feature, structure, or characteristic described in conjunction with the embodiment may be included in at least one embodiment of the present disclosure. The presence of the term at each place in the specification does not necessarily refer to the same embodiment, nor does it refer to a separate or alternative embodiment that is mutually exclusive of other embodiments. It may be understood by those skilled in the art, both explicitly and implicitly, that the embodiments described herein may be combined with other embodiments.

In the practical application of a battery, in order to improve the interfacial properties of an electrode assembly and enhance the adhesion between a separator and electrodes, a glue-coated separator is often adopted. During the preparation process, the separator requires a preheating treatment in a tunnel oven, followed by a hot-pressing operation, to achieve adhesion between the separator and the electrodes. However, the tunnel oven is costly, and hot-pressing demands high energy consumption, thereby increasing the preparation cost of the electrode assembly.

If the separator and the electrodes are directly bonded at room temperature, the adhesion force between the separator and the electrodes is weak. In this case, during electrolyte injection to the electrode assembly and battery formation, the separator fails to accommodate the volume changes of the electrodes due to gaps between the separator and the electrodes, resulting in wrinkles of the separator on the surfaces of the electrodes. Furthermore, the wrinkles may disrupt the transport pathways of active ions in the battery. Under normal conditions, active ions are uniformly inserted into the negative electrode via the electrolyte solution after being deintercalated from the positive electrode. However, wrinkles of the separator on the surfaces of the electrodes may result in that parts of the active ions are precipitated on the surface of the negative electrode instead of being inserted into the negative electrode, thereby affecting the cycling performance and the fast-charging performance of the battery.

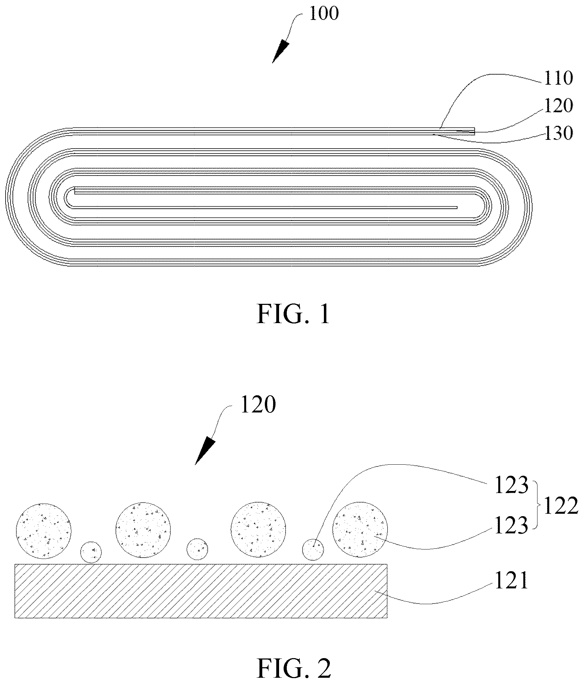

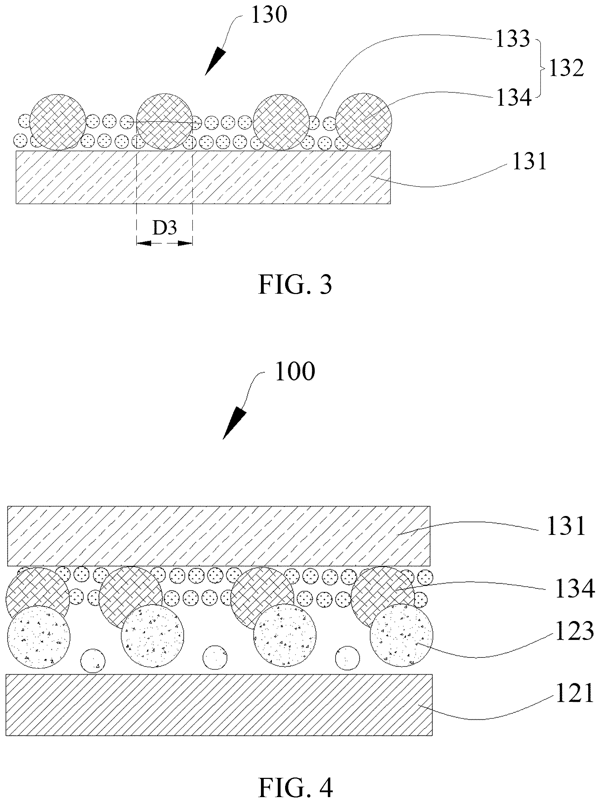

Reference is made to FIG. 1 to FIG. 4. The disclosure provides an electrode assembly 100, and the electrode assembly 100 includes a negative electrode 110, a separator 120, and a positive electrode 130. The separator 120 is disposed on one side of the negative electrode 110, the separator 120 includes a substrate 121 and an adhesive layer 122, and the adhesive layer 122 is disposed on a surface of the substrate 121. The adhesive layer 122 includes first polymers 123, and the first polymers 123 are copolymers of vinylidene fluoride and hexafluoropropylene. The positive electrode 130 is disposed on one side of the separator 120 away from the negative electrode 110. The positive electrode 130 includes a current collector layer 131 and an active material layer 132 that are stacked. The active material layer 132 is disposed on a surface of the current collector layer 131 and is disposed facing the adhesive layer 122. The active material layer 132 includes active particles 133 and second polymers 134. The second polymers 134 are particulate, the second polymers 134 are dispersed in the active particles 133, and the second polymers 134 are bonded with the first polymers 123.

It may be understood that, the negative electrode 110, the separator 120, and the positive electrode 130 are sequentially stacked.

It may be understood that, the adhesive layer 122 being disposed on the substrate 121 is as follows. The adhesive layer 122 is disposed on one surface of the substrate 121, or there are two adhesive layers 122 and the two adhesive layers 122 are separately disposed on two opposite surfaces of the substrate 121.

It may be understood that, the active material layer 132 being disposed facing the adhesive layer 122 is as follows. The active material layer 132 and the adhesive layer 122 are disposed opposite to each other, so as to achieve the adhesion between the active material layer 132 and the adhesive layer 122, thereby achieving adhesion between the positive electrode 130 and the separator 120.

It may be understood that, the first polymers 123 are partially inserted into the active material layer 132, while the second polymers 134 are partially inserted into the adhesive layer 122.

In the embodiment, the negative electrode 110, the separator 120, and the positive electrode 130 are sequentially stacked. The separator 120 includes the substrate 121 and the adhesive layer 122, and the adhesive layer 122 includes the first polymers 123. The first polymers 123 are copolymers of the vinylidene fluoride and the hexafluoropropylene. Compared to the case where the first polymers 123 are polyvinylidene fluoride, the copolymer of the vinylidene fluoride and the hexafluoropropylene has lower regularity than the polyvinylidene fluoride, resulting in that a melting point of the copolymer of the vinylidene fluoride and the hexafluoropropylene is lower than a melting point of the polyvinylidene fluoride. Therefore, when the negative electrode 110, the separator 120, and the positive electrode 130 are pressed together, the separator 120 can deform during the lamination process and be bonded with the positive electrode 130 without being preheated in a tunnel oven, ensuring superior attachment between the negative electrode 110, the separator 120, and the positive electrode 130. In the assembly process of the electrode assembly 100 provided in the disclosure, the separator 120 may be bonded with the positive electrode 130 and superior attachment between the separator 120 and the positive electrode 130 may be achieved without preheating the separator 120 in a tunnel oven or hot-pressing the separator 120, which is beneficial for reducing the energy consumption requirements for preparing the electrode assembly 100, thereby lowering the preparation cost of the electrode assembly 100. Furthermore, the active material layer 132 includes active particles 133 and the second polymers 134, and the second polymers 134 are dispersed in the active particles 133. In other words, the second polymers 134 are partially exposed on the surface of the active material layer 132 facing the adhesive layer 122. When the adhesive layer 122 and the active material layer 132 are disposed opposite to each other, the first polymers 123 and the second polymers 134 are bonded with each other, achieving the adhesion between the positive electrode 130 and the separator 120. During the lamination process, both the first polymers 123 and the second polymers 134 deform and are tightly bonded with each other, resulting in a strong adhesion between the positive electrode 130 and the separator 120. Compared to the case where the first polymers 123 of the separator 120 are directly bonded with the active particles 133, the adhesion between the first polymers 123 and the second polymers 134 is stronger, which further enhances the adhesion between the separator 120 and the positive electrode 130. The reason is that the second polymers 134 and the first polymers 123 both have a softer texture, while the active particles 133 have a harder texture. Additionally, the negative electrode 110, the separator 120, and the positive electrode 130 are stacked and wound, followed by lamination. In this case, the negative electrode 110, the separator 120, and the positive electrode 130 are tied together, and the positive electrode 130 is tightly bonded with the separator 120, preventing the separator 120 from detaching from the positive electrode 130. A tight attachment between the separator 120 and the negative electrode 110 is also ensured. In the disclosure, superior adhesion between the separator 120 and the positive electrode 130 is achieved, enabling superior attachment between the separator 120 and the negative electrode 110. In this way, the separator 120 may suppress the thermal expansion of the negative electrode 110 during charge and discharge cycles. Moreover, the separator 120 can still attach well to the negative electrode 110 after the contraction of the negative electrode 110, avoiding wrinkles on the surface of the negative electrode 110. Therefore, an increase of internal resistance of the battery 200 due to wrinkles of the separator 120 may be avoided, and lithium precipitation at the wrinkles on the surface of the negative electrode 110 caused by deposition of active ions in the battery 200 may be avoided, thereby extending the service life of the electrode assembly 100. It is also beneficial for improving the energy density and the cycling performance of the battery 200 when the electrode assembly 100 is applied to the battery 200.

It may be understood that, the negative electrode 110, the separator 120, and the positive electrode 130 are stacked and wound, and the negative electrode 110, the separator 120, and the positive electrode 130 are pressed together through cold-pressing to form the electrode assembly 100. In this way, a strong adhesion between the negative electrode 110, the separator 120, and the positive electrode 130 is achieved.

Optionally, the material of the substrate 121 includes at least one member selected from a group consisting of glass fiber, non-woven fabric, polyethylene, polypropylene, and polyvinylidene fluoride.

Optionally, in some embodiments, when the material of the substrate 121 is polyethylene, the separator 120 further includes a heat-resistant layer. The heat-resistant layer is disposed between the substrate 121 and the adhesive layer 122 to enhance the heat resistance of the separator 120. In this way, the separator 120 can withstand the heat generated by the positive electrode 130 and the negative electrode 110 during charge and discharge cycles, thereby extending the service life of the separator 120. Optionally, the heat-resistant layer is a ceramic layer.

Optionally, the active particles 133 are selected from at least one of lithium transition metal oxides and their modified materials. In some embodiments, the active particles 133 are lithium iron phosphate. The modified materials may be the lithium transition metal oxides subjected to doping and/or coating modifications. In an embodiment, the lithium transition metal oxides may be, but are not limited to, lithium cobalt oxide, lithium nickel oxide, lithium manganese oxide, lithium nickel manganese oxide, lithium nickel cobalt manganese oxide, and lithium nickel cobalt aluminum oxide.

Optionally, the material of the current collector layer 131 is aluminum. In some embodiments, the current collector layer 131 is aluminum foil. The current collector layer 131 is configured to collect and transmit the current of the active material layer 132.

Optionally, the substrate 121 includes multiple micropores arranged in an array. When the electrode assembly 100 is applied to the battery 200, the micropores allow the active ions in the electrolyte solution to pass through.

In some embodiments, the melting point of the first polymers 123 ranges from 100°C to 140°C.

Specifically, the melting point of the first polymers 123 may be 100°C, 102°C, 105°C, 108°C, 110°C, 112°C, 115°C, 118°C, 120°C, 122°C, 125°C, 128°C, 130°C, 132°C, 135°C, 136°C, 138°C, and 140°C.

In this embodiment, the first polymers 123 are copolymers of the vinylidene fluoride and the hexafluoropropylene. Compared to the case where the first polymers 123 are the polyvinylidene fluoride, the first polymers 123 in this embodiment have a lower melting point. When the melting point of the first polymers 123 ranges from 100°C to 140°C, the melting point of the first polymers 123 is within a reasonable range. Therefore, when the negative electrode 110, the separator 120, and the positive electrode 130 are pressed together, the separator 120 can deform during the lamination process and be bonded with the positive electrode 130 without being preheated in a tunnel oven, ensuring superior attachment between the negative electrode 110, the separator 120, and the positive electrode 130, which is beneficial for reducing the energy consumption requirements for preparing the electrode assembly 100, thereby lowering the preparation cost of the electrode assembly 100. Additionally, when the electrode assembly 100 is applied to the battery 200, the expansion degree of the separator 120 is within a reasonable range, allowing the separator 120 to be effectively bonded with the negative electrode 110, thereby enabling the separator 120 to effectively suppress the expansion and deformation of the negative electrode 110. Therefore, the separator 120 can remain in a stable form and have a longer service life, resulting in high safety performance of the battery 200 when the electrode assembly 100 is applied to the battery 200. When the melting point of the first polymers 123 is excessively high, the separator 120 needs to be preheated in a tunnel oven before the negative electrode 110, the separator 120, and the positive electrode 130 are pressed together. Only then can the separator 120 deform and be bonded with the positive electrode 130 during the lamination process. In this case, the energy consumption in the preparation process of the electrode assembly 100 is increased, which leads to a more cumbersome preparation process of the electrode assembly 100 and raises the preparation cost of the electrode assembly 100. If the melting point of the first polymers 123 is excessively low, the thermal stability of the adhesive layer 122 is poor, causing excessive swelling of the separator 120. When the electrode assembly 100 is assembled to the battery 200 and the battery 200 undergoes charge and discharge cycles, the negative electrode 110 expands significantly due to heat generation, and the separator 120 expands excessively. In this way, the adhesive force between the separator 120 and the negative electrode 110 is weakened, thereby reducing the ability of the separator 120 to suppress the deformation of the negative electrode 110 and reducing the safety performance of the battery 200 when the electrode assembly 100 is applied to the battery 200.

In an embodiment, the melting point of the first polymers 123 ranges from 125°C to 140°C. Specifically, the melting point of the first polymers 123 may be, but is not limited to, 125°C, 128°C, 130°C, 132°C, 135°C, 136°C, 138°C, and 140°C. When the first polymers 123 is applied to the electrode assembly 100, superior adhesion between the separator 120 and positive electrode 130 is ensured.

In an embodiment, the melting point of the first polymers 123 is 135°C. When the first polymers 123 are applied to the electrode assembly 100, optimal adhesion between the separator 120 and positive electrode 130 is ensured.

In some embodiments, the glass transition temperature *Tg* of the second polymers 134 satisfies 35°C ≤ *Tg* ≤ 60°C.

Specifically, the *Tg* of the second polymers 134 may be, but is not limited to, 35°C, 40°C, 42°C, 45°C, 48°C, 50°C, 52°C, 55°C, 58°C, and 60°C.

It may be understood that, the glass transition temperature represents a temperature at which a polymeric material transitions from a solid to a flowing plastic.

In the embodiment, the glass transition temperature *Tg* of the second polymers 134 satisfies 35°C ≤ *Tg* ≤ 60°C. In this case, the glass transition temperature of the second polymers 134 is within a reasonable range, and the flowability of the second polymers 134 is within a reasonable range when the negative electrode 110, the separator 120, and the positive electrode 130 are pressed together. On one hand, sufficient adhesion between the second polymers 134 and the first polymers 123 is achieved, ensuring superior adhesion between the positive electrode 130 and the separator 120. On the other hand, a situation where the second polymers 134 block the micropores on the substrate 121 of the separator 120 is avoided, which would otherwise increase the internal resistance of the battery 200 when the electrode assembly 100 is applied to the battery 200. Consequently, the battery 200 has high energy density and superior cycling performance when the electrode assembly is applied to the battery 200. When the glass transition temperature of the second polymers 134 is excessively high, the second polymers 134 have poor flowability when the negative electrode 110, the separator 120, and the positive electrode 130 are pressed together, making it more difficult for the second polymers 134 to be bonded with the first polymers 123, thereby degrading the adhesion between the first polymers 123 and the second polymers 134. In this case, the adhesion between the positive electrode 130 and the separator 120 is degraded, and the attachment between the separator 120 and the negative electrode 110 is also degraded. When the electrode assembly 100 is applied to the battery 200, the separator 120 fails to suppress the expansion of the negative electrode 110 during charge and discharge cycles, resulting in wrinkles of the separator 120 on the surface of the positive electrode 130 or the surface of the negative electrode 110. In this case, the internal resistance of the battery 200 is increased or lithium precipitation occurs on the surface of the negative electrode 110, which reduces the energy density and the cycling performance of the battery 200 when the electrode assembly 100 is applied to the battery 200. When the glass transition temperature of the second polymers 134 is excessively low, the second polymers 134 have better flowability when the negative electrode 110, the separator 120, and the positive electrode 130 are pressed together, which facilitates the intermixing between the first polymers 123 and the second polymers 134 and ensures superior adhesion between the first polymers 123 and the second polymers 134. However, a better flowability may cause the second polymers 134 to block the micropores on the substrate 121 of the separator 120. In this case, when the electrode assembly 100 is applied to the battery 200, the impedance for active ions in the electrolyte solution to pass through the separator 120 is increased, resulting in an increase of the internal resistance of the battery 200, thereby comp the safety performance of the battery 200 and shorten the service life of the battery 200.

In some embodiments, a molar ratio *α* of the vinylidene fluoride to the hexafluoropropylene in the raw material of the first polymers 123 satisfies 1 ≤ *α* ≤ 9.

Specifically, the molar ratio *α* of the vinylidene fluoride to the hexafluoropropylene may be, but is not limited to, 1, 1.2, 1.5, 2, 2.5, 3, 3.6, 4, 4.5, 5, 5.5, 6, 6.5, 7, 7.5, 8, 8.5, and 9.

It may be understood that, by regulating the molar ratio of the vinylidene fluoride to the hexafluoropropylene, the regularity of the first polymers 123 may be adjusted, thereby regulating the melting point of the first polymers 123.

In the raw material of the first polymers 123 provided in this embodiment, the vinylidene fluoride and the hexafluoropropylene form the first polymers 123 through copolymerization. By adjusting the molar ratio of the vinylidene fluoride to the hexafluoropropylene, the proportion of the vinylidene fluoride and the hexafluoropropylene in the first polymers 123 can be controlled. When the molar ratio α of the vinylidene fluoride to the hexafluoropropylene satisfies 1 ≤ *α* ≤ 9, the molar ratio of the vinylidene fluoride to the hexafluoropropylene is within a reasonable range. On one hand, the regularity of the first polymers 123 is low, resulting in a low melting point of the first polymers 123. When the negative electrode 110, the separator 120, and the positive electrode 130 are pressed together, the separator 120 can deform during the lamination process and be bonded with the positive electrode 130 without being preheated. In this way, energy consumption in the preparation process of the electrode assembly 100 is reduced, and the preparation process of the electrode assembly 100 is simplified, which is beneficial for reducing the preparation cost of the electrode assembly 100. On the other hand, excessive swelling degree (SD) of the separator 120 under high temperatures due to excessive vinylidene fluoride content in the first polymers 123 is avoided. When the electrode assembly 100 is applied to the battery 200 and the battery 200 undergoes charge and discharge cycles, the separator 120 can be tightly bonded with the positive electrode 130 and attach to the negative electrode 110, effectively preventing wrinkles of the separator 120 on the surface of the positive electrode 130 or the surface of the negative electrode 110. In this way, an increase of the internal resistance of the battery 200 is avoided, ensuring high safety performance and energy density of the battery 200. When the molar ratio *α* of the vinylidene fluoride to hexafluoropropylene is excessively high, the monomer composition of the first polymers 123 contains either excessive vinylidene fluoride or insufficient hexafluoropropylene, resulting in higher regularity of the copolymer formed by the vinylidene fluoride and the hexafluoropropylene. In other words, the copolymer formed by the vinylidene fluoride and the hexafluoropropylene is similar to the polyvinylidene fluoride, which means that the melting point of the first polymers 123 is similar to the melting point of the polyvinylidene fluoride, and the melting point of the first polymers 123 is relatively high. When the first polymers 123 are applied to the separator 120, and when the negative electrode 110, the separator 120, and the positive electrode 130 are pressed together, the separator 120 needs to be preheated in a tunnel oven. Only then can the separator 120 deform and be bonded with the positive electrode 130 during the lamination process. In this case, the energy consumption in the preparation process of the electrode assembly 100 is increased, which leads to a more cumbersome preparation process of the electrode assembly 100 and raises the preparation cost of the electrode assembly 100. Conversely, when the molar ratio *α* of the vinylidene fluoride to the hexafluoropropylene is excessively low, the monomer composition of the first polymers 123 contains either insufficient vinylidene fluoride or excessive hexafluoropropylene, resulting in lower regularity of the copolymer formed by the vinylidene fluoride and the hexafluoropropylene and a relatively low melting point of the first polymers 123. However, correspondingly, excessive vinylidene fluoride content would cause excessively high SD of the first polymers 123 at high temperatures. When the electrode assembly 100 is applied to the battery 200 and the battery 200 undergoes charge and discharge cycles, the SD of the separator 120 is excessive, thereby reducing the attachment between the separator 120 and the positive electrode 130 or the negative electrode 110. Ultimately, wrinkles of the separator 120 appear on the surface of the positive electrode 130 or the surface of the negative electrode 110, which increases the internal resistance of the battery 200, and reduces the safety performance and energy density of the battery 200.

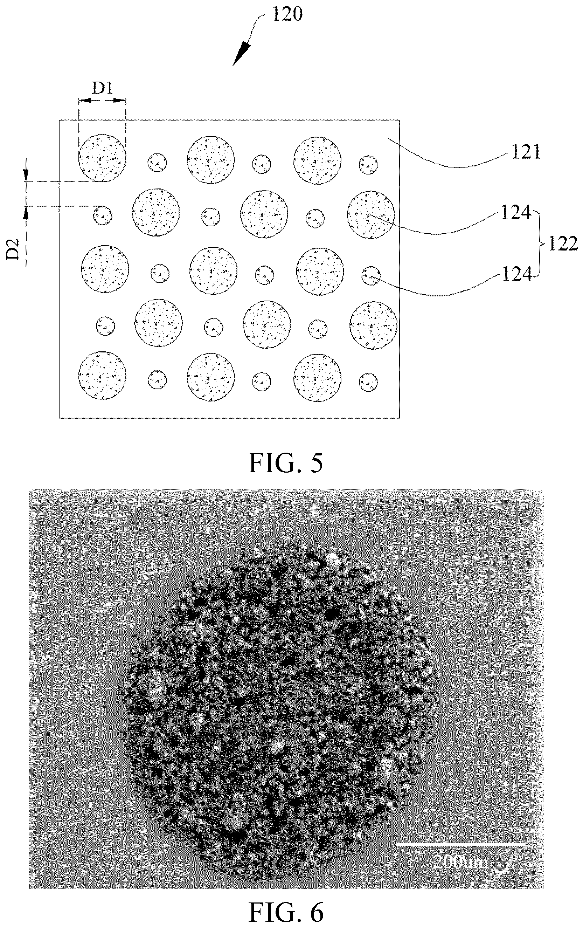

Reference is made to FIG. 5. In some embodiments, the adhesive layer 122 includes multiple adhesive portions 124 arranged at intervals. A width *D*1 of each of the multiple adhesive portions 124 satisfies 200µm ≤ *D*1 ≤ 1000µm.

Specifically, the width *D*1 of the adhesive portion 124 may be, but is not limited to, 200µm, 220µm, 250µm, 300µm, 340µm, 380µm, 400µm, 450µm, 480µm, 500µm, 520µm, 580µm, 600µm, 650µm, 700µm, 740µm, 780µm, 800µm, 850µm, 900µm, 950µm, and 1000µm.

It may be understood that, the width of the adhesive portion 124 refers to the maximum radial size of the orthogonal projection of the adhesive portion 124 on the surface of the substrate 121 facing the adhesive layer 122.

In this embodiment, the adhesive portion 124 increases the contact area between the separator 120 and the positive electrode 130, so that the adhesion between the separator 120 and the positive electrode 130 is improved. When the width *D*1 of the adhesive portion 124 satisfies 200µm ≤ *D*1 ≤ 1000µm, the width of the adhesive portion 124 is within a reasonable range. When the separator 120 and the positive electrode 130 are disposed opposite to each other, the contact area between the adhesive portions 124 and the positive electrode 130 is within a reasonable range. On one hand, the adhesive portions 124 can effectively contact with and be bonded with the positive electrode 130, ensuring superior adhesion between the positive electrode 130 and the separator 120, thereby preventing wrinkles of the separator 120 on the surface of the positive electrode 130 or the surface of the negative electrode 110. On the other hand, a situation where the adhesive portions 124 block the micropores on the substrate 121 of the separator 120 is avoided, which would otherwise increase the impedance for active ions to pass through the separator 120. Consequently, the battery 200 has high safety performance, long cycling life, and high energy density when the electrode assembly is applied to the battery 200. When the width of the adhesive portion 124 is excessively large, the maximum radial size of the orthogonal projection of the adhesive portion 124 on the surface of the substrate 121 facing the adhesive layer 122 is excessively large. Although the adhesive layer 122 can increase the contact area between the separator 120 and the positive electrode 130, the adhesive layer 122 may block the micropores on the substrate 121 of the separator 120. When the electrode assembly 100 is applied to the battery 200, the impedance for active ions in the electrolyte solution to pass through the separator 120 is increased, resulting in an increase of the internal resistance of the battery 200, thereby reducing the safety performance of the battery 200 and shortening the service life of the battery 200. When the width of the adhesive portion 124 is excessively small, the contact area between the adhesive portions 124 and the positive electrode 130 becomes excessively small when the separator 120 and the positive electrode 130 are disposed opposite to each other. In this case, it is difficult for the adhesive portions 124 to be tightly bonded with the positive electrode 130, weakening the adhesion between the positive electrode 130 and the separator 120. As a result, the separator 120 may develop wrinkles on the surface of the positive electrode 130.

It may be understood that, the adhesive layer 122 includes multiple adhesive portions 124 arranged at intervals. In other words, the multiple adhesive portions 124 are disposed at intervals on the surface of the substrate 121.

Optionally, the adhesive portions 124 are disposed as convex dots on the surface of the substrate 121.

In this embodiment, the adhesive portions 124 are disposed as convex dots on the surface of the substrate 121. Compared to a case where the adhesive portions 124 are recessed into the surface of the substrate 121, the adhesive portions 124 as convex dots are easier to contact with the second polymers 134 and be bonded with the second polymers 134 when the adhesive layer 122 and the active material layer 132 are disposed opposite to each other, so that superior adhesion between the separator 120 and the positive electrode 130 is achieved.

Optionally, in some embodiments, the adhesive portions 124 are disposed on the surface of the substrate 121 through rotational spraying.

Compared to an embodiment where the substrate 121 is fully coated with the first polymers 123, the adhesive portions 124 in this embodiment are disposed on the surface of the substrate 121 through rotational spraying. On one hand, a large width of the adhesive portion 124 is ensured, which may increase the contact area between the separator 120 and the positive electrode 130 when the negative electrode 110, the separator 120, and the positive electrode 130 are pressed together. As a result, the connection between adhesive portions 124 and the positive electrode 130 is achieved, thereby ensuring superior adhesion between the separator 120 and the positive electrode 130. On the other hand, the adhesive portions 124 are disposed at intervals on the surface of the substrate 121 through rotational spraying, which may prevent the first polymers 123 from blocking the micropores on the substrate 121 of the separator 120. In this case, when the electrode assembly 100 is applied to the battery 200, an increase of the impedance for active ions in the battery 200 to pass through the separator 120 is avoided, thereby improving the dynamic performance of the battery 200 when the electrode assembly 100 is applied to the battery 200.

In some embodiments, the distance *D*2 between two adjacent adhesive portions 124 satisfies 50µm ≤ *D*2 ≤ 500µm.

Specifically, *D*2 may be, but is not limited to, 50µm, 80µm, 100µm, 120µm, 150µm, 180µm, 200µm, 220µm, 250µm, 280µm, 300µm, 320µm, 350µm, 380µm, 400µm, 420µm, 450µm, and 500µm.

In this embodiment, the multiple adhesive portions 124 are disposed at intervals on the surface of the substrate 121, and the multiple adhesive portions 124 maintain a specific interval from one another. When the distance *D*2 between two adjacent adhesive portions 124 satisfies 50µm ≤ *D*2 ≤ 500µm, the distance between two adjacent adhesive portions 124 is within a reasonable range, and the distribution density of the adhesive portions 124 on the surface of the substrate 121 is within a reasonable range. On one hand, when the negative electrode 110, the separator 120, and the positive electrode 130 are pressed together, the contact area between the adhesive portions 124 and the active material layer 132 of the positive electrode 130 is within a reasonable range, ensuring superior adhesion between the positive electrode 130 and the separator 120. On the other hand, a situation where the adhesive portions 124 occupying excessive space on the surface of the substrate 121 is avoided, which would otherwise block the micropores on the separator 120. Consequently, an increase of the impedance for active ions to pass through the separator 120 is avoided, and the usage performance of the electrode assembly 100 is improved. When the distance *D*2 between two adjacent adhesive portions 124 is excessively large, the adhesive portions 124 are sparsely distributed on the surface of the substrate 121. When the negative electrode 110, the separator 120, and the positive electrode 130 are pressed together, the contact area between the adhesive portions 124 and the active material layer 132 of the positive electrode 130 is excessively small, weakening the adhesion between the positive electrode 130 and the separator 120. Consequently, wrinkles of the separator 120 may appear on the surface of the positive electrode 130 or the surface of the negative electrode 110, thereby degrading the usage performance of the electrode assembly 100. When the distance *D*2 between two adjacent adhesive portions 124 is excessively small, the adhesive portions 124 are densely distributed on the surface of the substrate 121. In this case, the contact area between the adhesive portions 124 and the active material layer 132 of the positive electrode 130 is within a reasonable range when the negative electrode 110, the separator 120, and the positive electrode 130 are pressed together, ensuring superior adhesion between the positive electrode 130 and the separator 120. However, correspondingly, the adhesive portions 124 occupy excessive space on the surface of the substrate 121, which may block the micropores on the surface of the substrate 121. When the electrode assembly 100 is applied to the battery 200, the impedance for active ions to pass through the separator 120 is increased, thereby increasing the internal resistance of the battery 200 and compromising the dynamic performance of the battery 200.

Reference is made to FIG. 6. Optionally, in the adhesive portion 124, the first polymers 123 exist as aggregates. In other words, the adhesive portion 124 includes multiple stacked aggregates of the first polymers 123, and the radial size of the aggregate of the first polymers 123 ranges from 3µm to 8µm.

Specifically, the radial size of the aggregate of the first polymers 123 may be, but is not limited to, 3µm, 3.2µm, 3.5µm, 3.8µm, 4µm, 4.2µm, 4.5µm, 4.8µm, 5µm, 5.2µm, 5.6µm, 5.8µm, 6µm, 6.2µm, 6.4µm, 6.5µm, 7µm, 7.2µm, 7.5µm, and 8µm.

In this embodiment, the formation process of the first polymers 123 is as follows. The vinylidene fluoride and the hexafluoropropylene undergo emulsion polymerization to form a nano-scale emulsion, followed by spray granulation to form aggregates of the first polymers 123. Subsequently, the aggregates are sprayed onto the surface of the substrate 121 through methods such as rotational spraying, and the adhesive portions 124 are formed by multiple aggregates of the first polymers 123. When the radial size of the aggregates of the first polymers 123 satisfies the range of 3µm to 8µm, the radial size of the aggregate of the first polymers 123 is within a reasonable range. On one hand, given a fixed width of the adhesive portion 124, the number of the aggregates of the first polymers 124 is within a reasonable range. When the negative electrode 110, the separator 120, and the positive electrode 130 are pressed together, the number of bonding sites between the aggregates of the first polymers 123 and the second polymers 134 is within a reasonable range, ensuring superior adhesion between the positive electrode 130 and the separator 120. On the other hand, a situation where the size of the aggregate of the first polymers 123 is excessively small is avoided, which would otherwise block the micropores on the substrate 121. Consequently, when the electrode assembly 100 is applied to the battery 200, the battery 200 has high energy density and superior cycling performance. When the radial size of the aggregate of the first polymers 123 is excessively large, the number of agglomerates decreases under a fixed width of the adhesive portion 124. When the negative electrode 110, the separator 120, and the positive electrode 130 are pressed together, the dispersed aggregates of the first polymers 123 contact with and are bonded with the second polymers 134 in the active material layer 132. A smaller number of aggregates corresponds to a smaller number of the bonding sites between the first polymers 123 and the second polymers 134, thereby weakening the adhesion between the adhesive layer 122 and the active material layer 132. When the radial size of the aggregate of the first polymers 123 is excessively small, the aggregates of the first polymers 123 may block the micropores on the substrate 121, which increases the internal resistance of the battery 200 when the electrode assembly 100 is applied to the battery 200, thereby lowering the energy density and degrading the cycling performance of the battery 200 when the electrode assembly 100 is applied to the battery 200.

In some embodiments, a spraying amount C of the adhesive layer 122 satisfies 0.5g/m² ≤ *C* ≤ 1.0g/m².

Specifically, the spraying amount C of the adhesive layer 122 may be, but is not limited to, 0.5g/m², 0.8g/m², 1.0g/m², 1.5g/m², 2.0g/m², 2.5g/m², 3.0g/m², 3.5g/m², 4.0g/m², 4.5g/m², 5.0g/m², 5.5g/m², 6.0g/m², 6.5g/m², 7.0g/m², 7.5g/m², 8.0g/m², 8.5g/m², 9.0g/m², 9.5g/m², and 10.0g/m².

It may be understood that, the spraying amount of the adhesive layer 122 refers to the spraying amount of the first polymers 123 on a single surface of the substrate 121.

In this embodiment, when the spraying amount C of the adhesive layer 122 satisfies 0.5g/m² ≤ *C* ≤ 1.0g/m², the spraying amount C of the adhesive layer 122 is within a reasonable range. When the negative electrode 110, the separator 120, and the positive electrode 130 are pressed together, the contact area between the adhesive layer 122 and the active material layer 132 is within a reasonable range. In this way, superior adhesion between the separator 120 and the positive electrode 130 is achieved, and the case where micropores on the substrate 121 of the separator 120 are blocked by the adhesive layer 122 may be avoided. Consequently, when the electrode assembly 100 is applied to the battery 200, the electrode assembly 100 has superior usage performance, and the battery 200 has superior cycling performance and safety performance. When the spraying amount *C* of the adhesive layer 122 is excessive, the total amount of the first polymers 123 sprayed onto the surface of the substrate 121 is excessive. In this case, the contact area between the adhesive layer 122 and the active material layer 132 is excessively large when the negative electrode 110, the separator 120, and the positive electrode 130 are pressed together, so that the adhesive layer 122 is tightly bonded with the active material layer 132, thereby ensuring superior adhesion between the separator 120 and the positive electrode 130. However, correspondingly, when the first polymers 123 are sprayed onto the surface of the substrate 121, the first polymers 123 may block the micropores on the surface of the substrate 121, which affects the impedance for active ions in the electrolyte solution to pass through the separator 120 and degrades the cycling performance of the battery 200 when the electrode assembly 100 is applied to the battery 200. When the spraying amount *C* of the adhesive layer 122 is excessively low, the total spraying amount of the first polymers 123 on the substrate 121 is excessively low. When the negative electrode 110, the separator 120, and the positive electrode 130 are pressed together, the contact area between the adhesive portions 124 and the active material layer 132 becomes excessively small, which makes it difficult for the separator 120 to be tightly bonded with the positive electrode 130, and makes it difficult for the separator 120 to be tightly attached to the negative electrode 110. When the electrode assembly 100 is applied to the battery 200, wrinkles of the separator 120 may appear on the surface of the positive electrode 130 or the surface of the negative electrode 110, leading to an increase of the internal resistance of the battery 200 and lithium precipitation at the wrinkles on the surface of the negative electrode 110 caused by deposition of active ions in the battery 200, thereby degrading the energy density, safety performance, and cycling performance of the battery 200.

In some embodiments, a mass fraction *A* of the second polymers 134 in the active material layer 132 satisfies 2% ≤ *A* ≤ 5%.

It may be understood that, the mass fraction of the second polymers 134 in the active material layer 132 is the ratio of the mass of the second polymers 134 to the mass of the active material layer 132.

Specifically, the mass fraction *A* of the second polymers 134 may be, but is not limited to, 2%, 2.2%, 2.4%, 2.6%, 2.8%, 3%, 3.2%, 3.4%, 3.6%, 3.8%, 4%, 4.2%, 4.3%, 4.5%, 4.6%, 4.7%, 4.9%, and 5%.

In this embodiment, the second polymers 134 are dispersed in the active particles 133 as particulate form. The material of the second polymers 134 is softer than the material of the active particles 133. Compared to the case where the adhesive layer 122 of the separator 120 is directly bonded with the active particles 133, the adhesion between the adhesive layer 122 and the second polymers 134 is stronger, which ensures tight adhesion between the separator 120 and the positive electrode 130, as well as tight attachment between the separator 120 and the negative electrode 110. When the mass fraction *A* of the second polymers 134 satisfies 2% ≤ *A* ≤ 5%, the mass fraction of the second polymers 134 is within a reasonable range. The second polymers 134 may be exposed on the surface of the active material layer 132 facing the adhesive layer 122. In this case, the contact area between the adhesive layer 122 and the second polymers 134 is excessively large when the adhesive layer 122 and the active material layer 132 are disposed opposite to each other, resulting in superior adhesion between the adhesive layer 122 and the active material layer 132, thereby ensuring superior adhesion between the separator 120 and the positive electrode 130. When the mass fraction *A* of the second polymers 134 is excessively large, the proportion of the second polymers 134 in the active material layer 132 is excessively large. Correspondingly, the proportion of the active particles 133 is excessively small, which reduces the amount of active materials that are reactive in the positive electrode 130, thereby lowering the energy density of the battery 200 when the electrode assembly 100 is applied to the battery 200. Additionally, a larger mass fraction of the second polymers 134 corresponds to a larger part of the second polymers 134 exposed on the surface of the active material layer 132, and the second polymers 134 may block the micropores on the substrate 121, which increases the internal resistance of the battery 200. When the mass fraction *A* of the second polymers 134 is excessively low, the proportion of the second polymers 134 in the active material layer 132 is excessively low, resulting in that the area occupied by the second polymers 134 exposed on the surface of the active material layer 132 facing the adhesive layer 122 is excessively small. When the adhesive layer 122 and the active material layer 132 are disposed opposite to each other, most part of the adhesive layer 122 is bonded with the active particles 133, with only a small part of the adhesive layer 122 bonded with the second polymers 134, resulting in poor adhesion between the separator 120 and the positive electrode 130.

In an embodiment, the mass fraction *A* of the second polymers 134 in the active material layer 132 satisfies 3% ≤ *A* ≤ 4%. Specifically, the value of the mass fraction *A* of the second polymers 134 may be, but is not limited to, 3%, 3.2%, 3.4%, 3.6%, 3.8%, and 4%. When the second polymers 134 are applied to the electrode assembly 100, superior adhesion between the separator 120 and the positive electrode 130 is achieved.

In an embodiment, the mass fraction *A* of the second polymers 134 in the active material layer 132 is 3%. In this case, when the second polymers 134 are applied to the electrode assembly 100, optimal adhesion between the separator 120 and the positive electrode 130 is achieved.

In some embodiments, before the negative electrode 110, the separator 120, and the positive electrode 130 are pressed together, the second polymers 134 are spherical or quasi-spherical, and a median particle size *D*3 of the second polymers 134 satisfies 5µm ≤ *D*3 ≤ 10µm.

It may be understood that, quasi-spherical refers to a sphere with a sphericity greater than 0.7.

Specifically, the value of the median particle size *D*3 of the second polymers 134 may be, but is not limited to, 5µm, 5.2µm, 5.5µm, 6µm, 6.3µm, 6.5µm, 6.8µm, 7µm, 7.2µm, 7.5µm, 7.8µm, 8µm, 8.5µm, 9µm, 9.5µm, and 10µm.

It may be understood that, before the negative electrode 110, the separator 120, and the positive electrode 130 are pressed together, the second polymers 134 are spherical or quasi-spherical. After the negative electrode 110, the separator 120, and the positive electrode 130 are pressed together, the second polymers 134 are granular.

In this embodiment, before the negative electrode 110, the separator 120, and the positive electrode 130 are pressed together, the second polymers 134 are spherical or quasi-spherical, and the median particle size *D*3 of the second polymers 134 satisfies 5µm ≤ *D*3 ≤ 10µm. This ensures that the second polymers 134 are partially exposed on the surface of the active material layer 132 facing the adhesive layer 122 when the second polymers 134 are thoroughly mixed with the active particles 133. The material of the second polymers 134 is softer than the material of the active particles 133, and the material of the first polymers 123 is also relatively soft. Consequently, the adhesion between the first polymers 123 and the second polymers 134 exceeds the adhesion between the first polymers 123 and the active particles 133. In this case, the second polymers 134 may be exposed on the surface of the active material layer 132, which enables effective adhesion with the first polymers 123, thereby ensuring superior adhesion between the positive electrode 130 and the separator 120. When the median particle size *D*3 of the second polymers 134 is excessively large, given a fixed mass fraction of the second polymers 134, the number of spheres of the second polymers 134 is excessively small, resulting in non-uniform dispersion of the second polymers 134 in the active particles 133. In other words, after the second polymers 134 are mixed with the active particles 133, the number of spheres of the second polymers 134 is excessively small, which increases the distance between two adjacent spheres of the second polymers 134. In this case, even if the negative electrode 110, the separator 120, and the positive electrode 130 are pressed together, the contact area between the first polymers 123 and the second polymers 134 is still small, resulting in relatively poor adhesion between the separator 120 and the positive electrode 130. Furthermore, bonding regions between the first polymers 123 and second polymers 134 are unevenly distributed, which causes poor adhesion between the positive electrode 130 and parts of the separator 120, resulting in that the separator 120 comes off from the positive electrode 130. As a result, the usage performance of the electrode assembly 100 is degraded. When the median particle size *D*3 of the second polymers 134 is excessively small, it is difficult for the second polymers 134 to be exposed on the surface of the active material layer 132 facing the adhesive layer 122 after the second polymers 134 are mixed with the active particles 133. When the active material layer 132 and adhesive layer 122 are disposed opposite to each other, the adhesive portions 124 of the adhesive layer 122 can only be bonded with the active particles 133 of the active material layer 132, rather than contacting with and being bonded with the second polymers 134 of the active material layer 132. In this case, the adhesion between the separator 120 and the positive electrode 130 is degraded, thereby compromising the usage performance of the electrode assembly 100.

In an embodiment, before the negative electrode 110, the separator 120, and the positive electrode 130 are pressed together, the second polymers 134 are spherical or quasi-spherical. The median particle size *D*3 of the second polymers 134 satisfies 7µm ≤ *D*3 ≤ 9µm. Specifically, the value of the median particle size *D*3 of the second polymers 134 may be, but are not limited to, 7µm, 7.2µm, 7.5µm, 7.8µm, 8µm, 8.5µm, and 9µm. When the second polymers 134 are applied to the electrode assembly 100, superior adhesion between the separator 120 and the positive electrode 130 is achieved.

In an embodiment, before the negative electrode 110, the separator 120, and the positive electrode 130 are pressed together, the second polymers 134 are spherical or quasi-spherical. The median particle size *D*3 of the second polymers 134 is 8µm. When the second polymers 134 are applied to the electrode assembly 100, optimal adhesion between the separator 120 and the positive electrode 130 is achieved.

In some embodiments, the second polymers 134 include at least one member selected from a group consisting of polymethyl methacrylate, polyvinylidene fluoride, and polyethylene.

In this embodiment, the second polymers 134 include at least one member selected from a group consisting of polymethyl methacrylate, polyvinylidene fluoride, and polyethylene, such that the second polymers 134 possess a certain flowability and can be bonded with the adhesive portions 124 of the adhesive layer 122 in a staggered manner when the active material layer 132 and the adhesive layer 122 are disposed opposite to each other. In this way, superior adhesion between the active material layer 132 and the adhesive layer 122 is ensured, such that superior adhesion between the separator 120 and the positive electrode 130 is ensured.

Optionally, in some embodiments, the active material layer 132 includes a first additive, which is used to bind the active particles 133 and the second polymers 134 together.

In this embodiment, the first additive is used to bind the active particles 133 and the second polymers 134 together to form the active material layer 132, such that the active material layer 132 is formed as an integrated whole by bonding, and the overall performance of the positive electrode 130 is enhanced.

Optionally, the first additive is a water-based binder, and the first additive includes at least one member selected from a group consisting of polyacrylic acid, polyvinylidene fluoride, and polytetrafluoroethylene, etc.

Optionally, in some embodiments, the active material layer 132 includes a first conductive agent, and the first conductive agent is used to enhance the conductivity performance of the active material layer 132.

Optionally, the first conductive agent includes at least one member selected from a group consisting of conductive carbon, graphite, superconducting carbon, acetylene black, carbon black, Ketjen black, carbon dot, carbon nanotube, graphene, and carbon nanofiber, etc.

Optionally, the negative electrode 110 includes a negative current collector layer (not shown) and a negative active layer (not shown). The negative active layer is disposed on the surface of the negative current collector layer, and the negative active layer includes a negative active material. The negative active material includes at least one member selected from a group consisting of metallic lithium, artificial graphite, natural graphite, graphene, and other composite materials.

Optionally, the negative current collector layer is copper. The negative current collector layer is a copper foil.

Optionally, the negative active layer further includes a second additive, a second conductive agent, and a negative thickener. The second additive is used to bind various components in the negative active layer together, thereby enhancing the overall performance of the negative active layer. The second conductive agent is used to enhance the conductivity of the negative active layer. The negative thickener is used to enhance the adhesion of the negative active layer.

Optionally, the second conductive agent includes at least one member selected from a group consisting of acetylene black, conductive carbon black, carbon nanotube, carbon fiber, and graphene, etc.

Optionally, the second additive includes at least one member selected from a group consisting of asphalt binder, styrene-butadiene rubber (SBR), polyvinylidene fluoride (PVDF), polytetrafluoroethylene (PTFE), polyvinyl alcohol (PVA), polyacrylonitrile (PAN), polyacrylic acid (PAA), polyacrylate, carboxymethyl cellulose (CMC), and sodium alginate, etc.

Optionally, the negative thickener includes at least one member selected from a group consisting of sodium carboxymethyl cellulose (CMC), polyacrylamide (PAM), and polymethyl acrylate (PMA), etc.

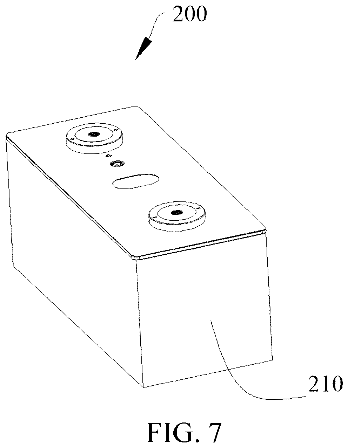

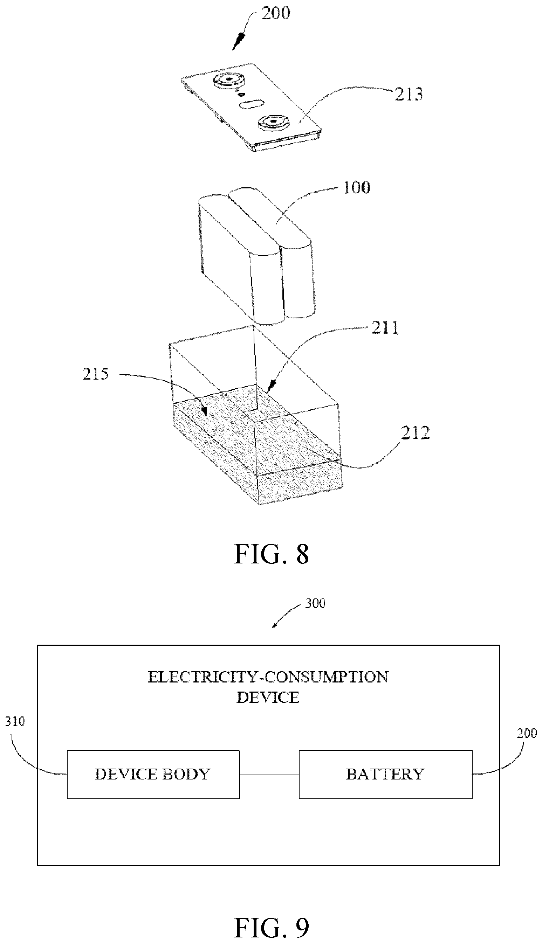

Reference is made to FIG. 7 and FIG. 8. The disclosure further provides a battery 200. The battery 200 includes a housing 210, an electrolyte solution 215, and the electrode assembly 100 provided in the disclosure. The housing 210 defines an accommodating chamber 211 and is configured to accommodate the electrolyte solution 215 and the electrode assembly 100, and the electrolyte solution 215 is configured to immerse at least part of the electrode assembly 100.

In this embodiment, the battery 200 includes the electrode assembly 100 provided in the disclosure. Superior adhesion between the separator 120 and the positive electrode 130 in the electrode assembly 100 is achieved, and superior attachment between the separator 120 and the negative electrode 110 is achieved. When the electrolyte solution 215 and electrode assembly 100 are assembled into the battery 200, active ions in the electrolyte solution 215 can freely migrate in the battery 200, and the active ions are intercalated into or deintercalated from the positive electrode 130 or the negative electrode 110 to realize charge and discharge cycles of the battery 200. Superior adhesion between the separator 120 and the positive electrode 130 in the electrode assembly 100 is achieved, and superior attachment between the separator 120 and the negative electrode 110 is also achieved, which prevents wrinkling of the separator 120 on the surface of the positive electrode 130 or the surface of the negative electrode 110. Consequently, intercalation or deintercalation of the active ions on the surface of the positive electrode 130 or the surface of the negative electrode 110 may be avoided, the increase of the internal resistance of the battery 200 may be avoided, and precipitation of the active ions on the surface of the negative electrode 110 may be avoided, which would otherwise affect the safety performance of the battery 200. Ultimately, the battery 200 is ensured to achieve high safety performance, high cycling performance, and high energy density.

Optionally, the battery 200 may be one of a cylindrical battery, a prismatic battery, or a pouch battery. When the battery 200 is a cylindrical battery, the negative electrode 110, the separator 120, and the positive electrode 130 do not require pressing.

Optionally, the battery 200 may be a lithium-ion battery, and a sodium-ion battery, etc.

Optionally, the housing 210 includes a side shell 212 and a top cap 213, and the accommodation chamber 211 are enclosed by the side shell 212 and the top cap 213.

Optionally, the electrolyte solution 215 includes a solvent and an electrolyte. The solvent is used to dissolve the electrolyte, and the electrolyte includes active ions.

Optionally, the solvent includes at least one member selected from a group consisting of ethylene carbonate, propylene carbonate, diethyl carbonate, ethyl methyl carbonate, dimethyl carbonate, ethyl acetate, ethyl propionate, propyl propionate, 1,1,2,2-tetrafluoroethyl-2,2,3,3-tetrafluoropropyl ether, and ethylene glycol dimethyl ether.

Optionally, the electrolyte includes at least one member selected from a group consisting of lithium hexafluorophosphate, lithium bis(fluorosulfonyl)imide, lithium difluorophosphate, lithium trifluoromethanesulfonimide, lithium triflate, and lithium perchlorate.

The technical solutions of the disclosure are further elaborated through multiple embodiments below.

Embodiments 1 to 8 and comparative embodiment 1 are as follows.

### 1. Preparation of the separator 120

20g of copolymer of the vinylidene fluoride and the hexafluoropropylene, 3g of styrene-butadiene rubber, and 1g of sodium carboxymethyl cellulose are added to 100g of deionized water. After thorough mixing, the mixture is sprayed onto the surface of a substrate 121 through rotational spraying to form an adhesive layer 122 on the surface of the substrate 121. After drying, the separators 120 in embodiments 1 to 8 and comparative embodiment 1 are obtained. The styrene-butadiene rubber is used to enhance the adhesion between the substrate 121 and the copolymer of the vinylidene fluoride and the hexafluoropropylene, and the sodium carboxymethyl cellulose is used to suspend the 20g of copolymer of the vinylidene fluoride and the hexafluoropropylene in the deionized water and to increase viscosity.

The formation process of the first polymers 123 is as follows. An appropriate amount of the vinylidene fluoride and the hexafluoropropylene are added, and a nano-scale emulsion is formed by the vinylidene fluoride and the hexafluoropropylene through emulsion polymerization. Subsequently, the aggregates of the first polymers 123 are formed by spray granulation.

The values of the melting points of each of the first polymers 123 and the spraying amounts of each of the adhesive layers 122 in embodiments 1 to 8 and comparative embodiment 1 are shown in table 1. Additionally, the adhesive layers 122 in embodiments 1 to 8 each includes multiple adhesive portions 124, and the adhesive portions 124 are distributed at intervals on the surface of the substrate 121 and are disposed as convex dots on the surface of the substrate 121. In comparative embodiment 1, the adhesive layer 122 includes multiple adhesive portions 124, but the multiple adhesive portions 124 are recessed into the surface of the substrate 121. The morphology of the adhesive portions 124 may be observed via scanning electron microscopy (SEM). The morphology of the adhesive portions 124 on the surface of the substrate 121 is obtained mostly by controlling the wettability of the slurry of the adhesive layer 122. If the slurry exhibits superior wettability, the morphology of the adhesive portions 124 recessed into the surface of the substrate 121 in comparative embodiment 1 is obtained after the slurry is spread flat and dried. If the slurry exhibits poor wettability, the morphology of the adhesive portions 124 disposed as convex dots on the surface of the substrate 121 in embodiments 1 to 8 is obtained after the slurry is spread flat and dried.

### 2. Preparation of the positive electrode 130

8g of polyacrylic acid powder (the first additive) is dispersed in 200g of deionized water. Then, 5g to 15g (including but not limited to 5g, 8g, 10g, 12g, and 15g) of polymethyl methacrylate (the second polymers 134), 7g of conductive carbon (the first conductive agent), and 85g of lithium iron phosphate (the active particles 133) are added to the deionized water. After thorough mixing, a positive electrode slurry is prepared. The positive electrode slurry is coated on both surfaces of an aluminum foil (the current collector layer 131). After drying, cold-pressing, slitting, and cutting, the positive electrodes 130 in embodiments 1 to 8 and comparative embodiment 1 are obtained. The values of the mass fractions *A* of the second polymers 134 and the values of the median particle sizes *D3* of the second polymers 134 in the negative electrodes 110 in embodiments 1 to 8 and comparative embodiment 1 are shown in table 1.

### 3. Preparation of the negative electrode 110

10g of carboxymethyl cellulose (the second additive) is dispersed in 88.7g of deionized water. Then, 88g of graphite (the second conductive agent) and 2g of carboxymethyl cellulose (the negative electrode thickener) are added to the deionized water. After thorough mixing, a negative electrode slurry was prepared. The negative electrode slurry is coated on both surfaces of a copper foil (the negative electrode current collector layer 131). After drying, cold-pressing, slitting, and cutting, the negative electrodes 110 in embodiments 1 to 8 and comparative embodiment 1 are obtained.

### 4. Preparation of the electrolyte solution 215

In a glove box filled with argon gas with moisture content ≤ 1ppm, ethylene carbonate, dimethyl carbonate, and ethyl methyl carbonate are mixed at a mass ratio of 1:1:1. Subsequently, a dried electrolyte, i.e., lithium hexafluorophosphate, is dissolved into the solvent and stirred until fully dissolved. After thorough mixing, the electrolyte solution 215 is obtained.

### 5. Assembly of the battery 200

Each of the prepared separators 120 in embodiments 1 to 8 and comparative embodiment 1, each of the prepared positive electrodes 130 in embodiments 1 to 8 and comparative embodiment 1, and each of the prepared negative electrodes 110 in embodiments 1 to 8 and comparative embodiment 1 are sequentially stacked, so that the separator 120 is positioned between the positive electrode 130 and the negative electrode 110. After winding, the electrode assemblies 100 are obtained. Each of the electrode assemblies 100 is placed in a housing 210 and dried. Then, the above electrolyte solution 215 is injected. After standing, formation, and sealing, embodiment batteries 1 to 8 and comparative battery 1 are obtained. Specifically, the separator 120, the positive electrode 130, and the negative electrode 110 in embodiment 1 are disposed in the embodiment battery 1; the separator 120, the positive electrode 130, and the negative electrode 110 in embodiment 2 are disposed in the embodiment battery 2; the separator 120, the positive electrode 130, and the negative electrode 110 in comparative embodiment 1 are disposed in the comparative battery 1, and so forth.

Table 1 below shows the structural parameters of the electrode assemblies 100 in embodiments 1 to 8 and comparative embodiment 1.

**Table 1: structural parameters of the electrode assemblies 100 in embodiments 1 to 8 and comparative embodiment 1**

| Embodiments and comparative embodiment | Melting point of the first polymers 123 (°C) | Spraying amount of the adhesive layer 122 (g/m²) | Mass fraction *A* of the second polymers 134 (%) | Median particle size *D*3 of the second polymers 134 (µm) |
|---|---|---|---|---|
| Embodiment 1 | 130 | 0.8 | 3 | 8 |
| Embodiment 2 | 135 | 0.8 | 3 | 8 |
| Embodiment 3 | 140 | 0.8 | 3 | 8 |
| Embodiment 4 | 135 | 0.65 | 3 | 8 |
| Embodiment 5 | 135 | 0.5 | 3 | 8 |
| Embodiment 6 | 135 | 0.8 | 1 | 8 |
| Embodiment 7 | 135 | 0.8 | 5 | 8 |
| Embodiment 8 | 135 | 0.8 | 7 | 8 |
| Comparative embodiment 1 | 150 | 0.8 | / | / |

Performance tests of the battery 200 are as follows.

### (I) Performance test of the electrode assembly 100

### 1. Swelling performance test of the first polymers 123

The first polymers 123 in embodiments 1 to 8 and comparative embodiment 1 are tested respectively. Specifically, 139.5 g of N-methylpyrrolidone (NMP) is added to a beaker and stirred at 500 rounds per minute. Then, 10.5g of the first polymers 123 is weighed and added to the beaker to prepare an adhesive with the first polymers 123 of mass fraction of 7%. After baking, an adhesive film is obtained. The NMP is used to dissolve the first polymers 123.

Further, a first weight *W*1 of the adhesive film is recorded. The adhesive film is immersed in dimethyl carbonate (DMC) for 4 to 48 hours (e.g., 4h, 8h, 12h, 24h, or 48h), and then the adhesive film is taken out and liquid on the surface is wiped off. A second weight *W*2 of the adhesive film is recorded. The SD of the first polymers 123 is calculated as: SD = (*W*2 *- W*1) / *W*1 × 100%. Values of the SD of the first polymers 123 in embodiments 1 to 8 and comparative embodiment 1 after immersion in the dimethyl carbonate system for 24 hours are shown in table 2.

### 2. Test for adhesion between the separator 120 and the positive electrode 130

The separators 120 and the positive electrodes 130 in embodiments 1 to 8 and comparative embodiment 1 each is cut into a 100mm × 100mm square. Cold-pressing is performed on the separator 120 and the positive electrode 130 under the following conditions: temperature at 25°C, pressure at 4.5MPa, and duration for 40 seconds. After pressing, the separator 120 and the positive electrode 130 are removed for peel strength test conducted according to Chinese National Standard GB/T 2791-1995. Values of cold-pressing adhesion force between the separators 120 and positive electrodes 130 in embodiments 1 to 8 and comparative embodiment 1 under the temperature at 25°C, pressure at 4.5MPa, and duration for 40 seconds are shown in table 2.

### (II) Capacity test of the battery 200

Embodiment batteries 1 to 8 and comparative battery 1 each is processed as follows.

Step 1: the battery is left standing for 2 hours. Step 2: the battery is discharged to 2.5V at a constant current of 0.5C rate. Step 3: the battery is left standing for 30 minutes. Step 4: the battery is charged to 3.65V at a constant current of 0.5C rate, and then discharged to 0.05C at a constant voltage of 3.65V. Step 5: the battery is left standing for 30 minutes. Step 6: the battery is discharged to 2.5V at a constant current of 0.5C rate. Steps 4 to 6 are repeated for three times, and the discharge capacity of the final cycle is recorded as *C*0. Values *C*0 of capacity of embodiment batteries 1 to 8 and comparative battery 1 are shown in table 2.

### (III) Internal resistance test of the battery 200

At a testing temperature of 25°C, embodiment batteries 1 to 8 and comparative battery 1 are subjected to formation, and then are charged to 3.65V at a constant current of 0.5C, followed by charging at a constant voltage of 3.65V until the current reaches 0.05C. After being left standing for 10 minutes, these batteries are discharged to 2.5V at a constant current of 0.5C and left standing for 10 minutes. Capacities obtained at this step are used as the baseline.

Further, at a temperature of 25°C, these batteries are charged to 3.65V at a constant current of 0.5C, charged to 0.05C at a constant voltage of 3.65V, and then left standing for 10 minutes. A 0.5C constant current discharge is applied for 0.5 minute, and the voltage *V*1 of the battery 200 is recorded. Another 0.5C constant current discharge is applied for 0.5 minute, and the voltage *V*2 of the battery 200 is recorded. Values of direct current resistance (DCR) of embodiment batteries 1 to 8 and comparative battery 1 at 50% state of charge (SOC) are calculated as DCR = (*V*1 *- V*2) / 0.5C, with mΩ as the unit. The DCR values of embodiment batteries 1 to 8 and comparative battery 1 are shown in table 2.

### (IV) Interfacial wrinkle test of the negative electrode 110

Embodiment batteries 1 to 8 and comparative battery 1 are processed as follows.

Step 1: the battery is left standing for 2 hours. Step 2: the battery is charged to 2.5V at a constant power of 1P. Step 3: the battery is left standing for 30 minutes. Step 4: the battery is discharge to 3.65V at a constant power of 1P. Step 5: the battery is left standing for 30 minutes. Step 6: steps 3 to 5 are repeated for 11 times. After being fully charged, embodiment batteries 1 to 8 and comparative battery 1 are disassembled to observe interfacial wrinkles on the negative electrodes. The conditions of interfacial wrinkle on the negative electrodes 110 in embodiment batteries 1 to 8 and comparative battery 1 are shown in table 2.

Table 2 below shows the performance parameters of embodiment batteries 1 to 8 and comparative battery 1.

| Embodiment batteries and comparative battery | Swelling degree SD of the first polymers(%) | Cold-pressing adhesion force between the separator and the positive electrode (N/m) | Capacity *C*0 of the battery (Ah) | Direct-current resistance DCR of the battery(mΩ) | Situation of interfacial wrinkle on the negative electrode |
|---|---|---|---|---|---|
| Embodiment battery 1 | 140 | 3 | 2.86 | 3.9 | No wrinkle |
| Embodiment battery 2 | 100 | 2.5 | 2.87 | 3.7 | No wrinkle |
| Embodiment battery 3 | 85 | 1.1 | 2.85 | 3.6 | Slightly wrinkled |
| Embodiment battery 4 | 100 | 2.1 | 2.85 | 3.65 | Extremely slightly wrinkled |
| Embodiment battery 5 | 100 | 1.5 | 2.85 | 3.6 | Slightly wrinkled |
| Embodiment battery 6 | 100 | 1.9 | 2.95 | 3.6 | Slightly wrinkled |
| Embodiment battery 7 | 100 | 2.9 | 2.76 | 3.85 | No wrinkle |
| Embodiment battery 8 | 100 | 3.3 | 2.7 | 4 | No wrinkle |
| Comparative battery 1 | 70 | 0.3 | 3 | 3.5 | Severely wrinkled |

Reference is made to table 1 and table 2. In embodiments 1 to 3, the melting points of the first polymers 123 are all within a reasonable range. Additionally, as the melting point of the first polymers 123 gradually decreases, under the same condition, the SD of the first polymers 123 gradually increases, and the cold-pressing adhesion force between the separator 120 and positive electrode 130 also gradually increases. As a result, the situation of interfacial wrinkle on the negative electrode 110 is gradually improved, and the DCR of the battery 200 gradually increases accordingly. Reasons are as follows. As the melting point of the first polymers 123 gradually decreases, when the negative electrode 110, the separator 120, and the positive electrode 130 are pressed together, the first polymers 123 of the separator 120 can deform during the lamination process and be bonded with the positive electrode 130 without preheating the separator 120 in a tunnel oven. Moreover, as the melting point of the first polymers 123 decreases, the first polymers 123 are more prone to deformation under cold-pressing conditions, resulting in a stronger cold-pressing adhesion force between the separator 120 and the positive electrode 130, thereby enhancing the adhesion between the separator 120 and the positive electrode 130. Furthermore, the negative electrode 110, the separator 120, and the positive electrode 130 are disposed in sequence, such that superior adhesion between the separator 120 and the positive electrode 130 is ensured, and superior attachment between the separator 120 and the negative electrode 110 is ensured. In this way, the separator 120 can suppress thermal expansion of the negative electrode 110 during charge and discharge cycles and maintain superior attachment with the negative electrode 110 even after contraction of the negative electrode 110, avoiding wrinkles on the surface of the negative electrode 110, thereby continuously improving the situation of interfacial wrinkle on the negative electrode 110. However, correspondingly, a reduced melting point of the first polymers 123 corresponds to a reduced thermal stability of the first polymers 123. During the charge and discharge cycles of the battery 200, the positive electrode 130 and/or the negative electrode 110 generates heat, and the separator 120 may be softened or melt under high temperature environment. Consequently, the structure of the separator 120 is destabilized, the impedance for active ions in the electrolyte solution 215 to pass through the separator 120 is increased, thereby increasing the internal resistance of the battery 200.

It may be understood that, the SD of the first polymers 123 after immersion in the dimethyl carbonate system for 24 hours satisfies 50% ≤ SD ≤ 150%. Specifically, the value of SD may be, but is not limited to, 50%, 55%, 60%, 65%, 70%, 75%, 80%, 85%, 90%, 95%, 100%, 105%, 110%, 115%, 120%, 125%, 130%, 135%, 140%, 145%, and 150%.

In this embodiment, the first polymers 123 are copolymers of the vinylidene fluoride and the hexafluoropropylene. As the molar ratio of the vinylidene fluoride to the hexafluoropropylene decreases, the melting point of the first polymers 123 gradually decreases, and correspondingly, the SD of the first polymers 123 gradually increases. When the SD of the first polymers 123 satisfies 50% ≤ SD ≤ 150%, the SD of the first polymers 123 is within a reasonable range. On one hand, moderate expansion of the first polymers 123 increases the contact area between the first polymers 123 and the second polymers 134, thereby improving the adhesion between the separator 120 and positive electrode 130. On the other hand, molecular structural changes in the first polymers 123 due to excessive SD may be avoided, thereby preventing the cohesion of the first polymers 123 from reducing, and ensuring stable adhesion between the first polymers 123 and the second polymers 134. When the SD of the first polymers 123 is excessively high, the molecular structure of the first polymers 123 may be damaged during swelling, thereby weakening the cohesion of the first polymers 123, and impairing the stable adhesion between the first polymers 123 and the second polymers 134. Conversely, when the SD is excessively low, the contact area between the first polymers 123 and the second polymers 134 is small when the adhesive layer 122 and the active material layer 132 are disposed opposite to each other, resulting in poor adhesion between the separator 120 and the positive electrode 130.

In embodiments 2, 4, and 5, the spraying amounts of the adhesive layers 122 are all within a reasonable range. Moreover, as the spray amount of the adhesive layer 122 increases, the cold-pressing adhesion force between the separator 120 and the positive electrode 130 gradually increases, and the situation of interfacial wrinkle on the negative electrode 110 is improved. However, correspondingly, the DCR of the battery 200 gradually increases. Reasons are as follows. As the spraying amount of the adhesive layer 122 increases, the contact area between the adhesive layer 122 and the active material layer 132 of the positive electrode 130 gradually increases when the negative electrode 110, the separator 120, and the positive electrode 130 are pressed together. As a result, the adhesion between the separator 120 and the positive electrode 130 is strengthened, and superior attachment between the separator 120 and the negative electrode 110 is ensured. In this way, the separator 120 can suppress thermal expansion of the negative electrode 110 during charge and discharge cycles and maintain superior attachment with the negative electrode 110 even after contraction of the negative electrode 110, avoiding wrinkles on the surface of the negative electrode 110, thereby continuously improving the situation of interfacial wrinkle on the negative electrode 110. However, correspondingly, as the spraying amount of the adhesive layer 122 gradually increases, areas occupied by the adhesive layer 122 on the surface of the substrate 121 gradually increases. In this case, the adhesive layer 122 may block the micropores on the substrate 121, thereby increasing the impedance for active ions in the electrolyte solution 215 to pass through the separator 120, increasing the internal resistance of the battery 200, and compromises the cycling performance of the battery 200 in a certain degree.

In embodiment 2, and embodiments 6 to 8, the mass fractions of the second polymers 134 are all within a reasonable range. Moreover, as the mass fraction of the second polymers 134 increases, the cold-pressing adhesion force between the separator 120 and the positive electrode 130 gradually increases, and the situation of interfacial wrinkle on the negative electrode 110 is improved. However, correspondingly, the capacity of the battery 200 decreases and the DCR of the battery 200 gradually increases. Reasons are as follows. As the mass fraction of the second polymers 134 increases, there are more second polymers 134 exposed on the surface of the active material 132 facing the adhesive layer 122, so that the contact area between the adhesive layer 122 and the active material layer 132 of the positive electrode 130 gradually increases when the negative electrode 110, the separator 120, and the positive electrode 130 are pressed together. As a result, adhesion between the separator 120 and the positive electrode 130 is strengthened, and attachment between the separator 120 and the negative electrode 110 is improved. In this way, the separator 120 can suppress thermal expansion of the negative electrode 110 during charge and discharge cycles and maintain superior attachment with the negative electrode 110 even after contraction of the negative electrode 110, avoiding wrinkles on the surface of the negative electrode 110, thereby continuously improving the situation of interfacial wrinkle on the negative electrode 110. However, correspondingly, as the mass fraction of the second polymers 134 gradually increases, the mass proportion of the active particles 133 in the active material layer 132 decreases, leading to insufficient active materials that are reactive in the positive electrode 130, thereby reducing the capacity of the battery 200. Moreover, a larger mass fraction of the second polymers 134 corresponds to a larger part of the second polymers 134 exposed on the surface of the active material layer 132. In this case, the second polymers 134 may block the micropores on the substrate 121, thereby increasing the internal resistance of the battery 200.

In comparative embodiment 1, the melting point of the first polymers 123 is 150°C, which is higher than the melting points of the first polymers 123 in embodiments 1 to 8. The adhesive portions 124 in comparative embodiment 1 are recessed into the surface of the substrate 121, and the active material layer 132 in comparative embodiment 1 does not include the second polymers 134. Consequently, the SD of the first polymers 123 in comparative embodiment 1 is far lower than the SD of the first polymers 123 in embodiments 1 to 8, and the cold-pressing adhesion force between the separator 120 and the positive electrode 130 in comparative battery 1 is far lower than the cold-pressing adhesion forces between the separators 120 and the positive electrodes 130 in embodiment batteries 1 to 8. The interface of the negative electrode 110 in comparative battery 1 is severely wrinkled. Reasons are as follows. On one hand, in comparative embodiment 1, the adhesive portions 124 are recessed into the surface of the substrate 121. When the active material layer 132 and the adhesive layer 122 are disposed opposite to each other, the adhesive portions 124 in comparative embodiment 1 have difficulty to be bonded with the active material layer 132, and the contact area between the adhesive portions 124 and the active material layer 132 is small, thereby weakening the adhesion between the separator 120 and the positive electrode 130. Furthermore, the active material layer 132 in comparative embodiment 1 does not include the second polymers 134, which means that the first polymers 123 are directly bonded with the active particles 133. The adhesion between the first polymers 123 and the active particles 133 is poor, such that the adhesion between the separator 120 and the positive electrode 130 is poor, and the attachment between the separator 120 and the negative electrode 110 is poor. As a result, the separator 120 fails to suppress thermal expansion of the negative electrode 110 during charge and discharge cycles, and the separator 120 fails to attach to the negative electrode 110 after contraction of the negative electrode 110, resulting in severe wrinkles on the surface of the negative electrode 110.

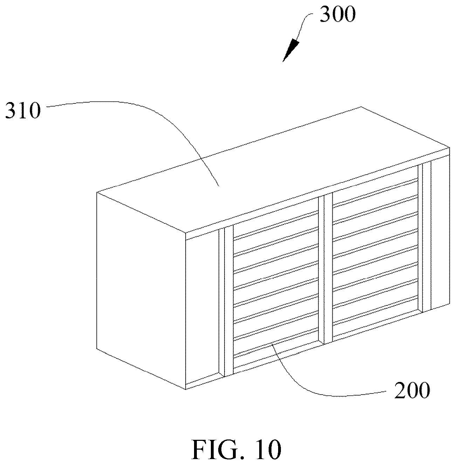

Reference is made to FIG. 9 and FIG. 10. The disclosure further provides an electricity-consumption device 300. The electricity-consumption device 300 includes a device body 310 and the battery 200 provided in the disclosure. The battery 200 is configured to power the device body 310.

It may be understood that, the battery 200 is electrically connected to the device body 310.

In the embodiment, the battery 200 has high safety performance, cycling performance, and energy density, such that the battery 200 can provide stable electrical energy for the device body 310, which is beneficial for improving usage experience for the user.

Optionally, the electricity-consumption device 300 in embodiments of the disclosure may be, but is not limited to, a cell phone, a tablet computer, a laptop, a desktop computer, a smart bracelet, a smart watch, an e-reader, a game console, and other portable electronic devices. It may also be an automobile, a truck, a sedan, a van, a freight car, a train, a high-speed train, an electric automatic vehicle, and other transportation tools. In addition, it may be various household appliances. In the disclosure, the electricity-consumption device 300 in the embodiment of FIG. 10 is an energy storage battery cabinet.

It may be understood that, the electricity-consumption device 300 is merely a form of the electricity-consumption device 300 to which the battery 200 is applied, and should not be understood as limitation to the electricity-consumption device 300 provided in the disclosure, nor should be understood as limitation to the electricity-consumption device 300 provided in various embodiments of the disclosure.

Reference terms "embodiment" and "implementation" referred to herein mean that particular features, structures, or characteristics described in conjunction with embodiments may be contained in at least one embodiment of the disclosure. The phrase appearing in various places in the specification does not necessarily refer to the same embodiment, a separate embodiment that is mutually exclusive with other embodiments, or an alternative embodiment. It is both explicitly and implicitly understood by those of ordinary skill in the art that the embodiments described in the specification may be combined with other embodiments. In addition, it may also be understood that the features, structures, or characteristics described in embodiments of the disclosure, without contradicting each other, can be combined at will to form yet another embodiment that does not depart from the spirit and scope of the technical solution of the disclosure.

Finally, it may be noted that the foregoing embodiments are merely intended to illustrate but not limit the technical solutions of the disclosure. Although the disclosure is described in detail with reference to the foregoing preferred embodiments, persons of ordinary skill in the art may understand that modifications or equivalent replacements can be made to the technical solutions of the disclosure without departing from the spirit and scope of the technical solutions of the disclosure.

## Claims

1. An electrode assembly (100), comprising:
a negative electrode (110);
a separator (120), wherein the separator (120) is disposed on one side of the negative electrode (110), the separator (120) comprises a substrate (121) and an adhesive layer (122), and the adhesive layer (122) is disposed on a surface of the substrate (121); and the adhesive layer (122) comprises first polymers (123), the first polymers (123) are copolymers of vinylidene fluoride and hexafluoropropylene; and
a positive electrode (130), wherein the positive electrode (130) is disposed on one side of the separator (120) away from the negative electrode (110), the positive electrode (130) comprises a current collector layer (131) and an active material layer (132) that are stacked; the active material layer (132) is disposed on a surface of the current collector layer (131) and is disposed facing the adhesive layer (122); and the active material layer (132) comprises active particles (133) and second polymers (134), the second polymers (134) are particulate, the second polymers (134) are dispersed in the active particles (133), and the second polymers (134) are bonded with the first polymers (123).

2. The electrode assembly (100) of claim 1, wherein a material of the substrate (121) comprises at least one member selected from a group consisting of glass fiber, non-woven fabric, polyethylene, polypropylene, and polyvinylidene fluoride.

3. The electrode assembly (100) of claim 1, wherein a melting point of the first polymers (123) ranges from 100°C to 140°C.

4. The electrode assembly (100) of claim 1, wherein a glass transition temperature *Tg* of the second polymers (134) satisfies 35°C ≤ *Tg* ≤ 60°C.

5. The electrode assembly (100) of claim 1, wherein in a raw material of the first polymers (123), a molar ratio *α* of the vinylidene fluoride to the hexafluoropropylene satisfies 1 ≤ *α* ≤ 9.

6. The electrode assembly (100) of claim 1, wherein the adhesive layer (122) comprises a plurality of adhesive portions (124) arranged at intervals, and a width *D*1 of each of the plurality of adhesive portions (124) satisfies 200µm ≤ *D*1 ≤ 1000µm.

7. The electrode assembly (100) of claim 6, wherein the plurality of adhesive portions (124) are disposed as convex dots on the surface of the substrate (121).

8. The electrode assembly (100) of claim 7, wherein the plurality of adhesive portions (124) are disposed on the surface of the substrate (121) through rotational spraying.

9. The electrode assembly (100) of claim 6, wherein a distance *D*2 between any two adjacent adhesive portions (124) satisfies 50µm ≤ *D*2 ≤ 500µm.

10. The electrode assembly (100) of claim 9, wherein a spraying amount C of the adhesive layer (122) satisfies 0.5g/m² ≤ *C* ≤ 1.0g/m².

11. The electrode assembly (100) of any of claims 1 to 10, wherein in the active material layer (132), a mass fraction *A* of the second polymers (134) satisfies 2% ≤ *A* ≤ 5%*.*

12. The electrode assembly (100) of claim 11, wherein before the negative electrode (110), the separator (120), and the positive electrode (130) are pressed together, the second polymers (134) are spherical or quasi-spherical, and a median particle diameter *D*3 of the second polymers (134) satisfies 5µm ≤ *D*3 ≤ 10µm.

13. The electrode assembly (100) of claim 1, wherein the second polymers (134) comprise at least one member selected from a group consisting of polymethyl methacrylate, polyvinylidene fluoride, and polyethylene.

14. A battery (200), wherein the battery (200) comprises a housing (210), an electrolyte solution (215), and the electrode assembly (100) of any one of claims 1 to 13, the housing (210) defines an accommodating chamber (211) and is configured to accommodate the electrolyte solution (215) and the electrode assembly (100), and the electrolyte solution (215) is configured to immerse at least part of the electrode assembly (100).

15. An electricity-consumption device (300), wherein the electricity-consumption device (300) comprises a device body (310) and the battery (200) of claim 14, and the battery (200) is configured to power the device body (310).
